# EUROPEAN PATENT APPLICATION

(11) **EP 4 756 765 A1**
(43) Date of publication of application: **10.06.2026**
(21) Application number: 24217302.9
(22) Date of filing: 03.12.2024
(51) Int. Cl.: G08B 13/196

(54) **SECURITY MONITORING SYSTEM**

(71) Applicant: Verisure Sàrl, 1290 Versoix (CH)
(72) Inventor: Hackett, Nicolas, 1290 Versoix (CH); Piedbois, Julien, 1290 Versoix (CH)
(74) Representative: Hansson Thyresson AB

(57) **Abstract**

A method for operating a security monitoring system for monitoring a premises is provided. The method comprises the steps of detecting a first person by means of a first imaging means arranged to monitor a first exterior portion of the premises, attempting to identify said first person, detecting a second person by means of a second imaging means arranged to monitor a second exterior portion of the premises, and attempting to identify said second person. Depending on the result of the attempt to identify said second person, the method comprises a step of performing one or more of a selection of actions.

## Description

### TECHNICAL FIELD

The present invention relates to a method for operating a security monitoring system for monitoring a premises and such security monitoring system.

### BACKGROUND

Security installations that are or include security monitoring systems for monitoring premises, often referred to as alarm systems, typically provide a means for detecting the presence and/or actions of people at premises and reacting to detected events. Commonly, such systems include sensors to detect opening and closing of doors and/or windows to provide a secure perimeter to the premises, creating one or more protected interior spaces, movement detectors to monitor spaces (both within and outside buildings) for signs of movement, microphones to detect sounds such as breaking glass, and image sensors to capture still or moving images of monitored zones. Such systems may be self-contained, with alarm indicators such as sirens and flashing lights that may be activated in the event of an alarm condition being detected. Such installations typically include a control unit (which may also be termed a central unit), generally mains powered, that is coupled to the sensors, detectors, cameras, etc. ("nodes"), and which processes received detections and determines a response. The central unit may be linked to the various nodes by wires, but increasingly is instead linked wirelessly, rather than by wires, since this facilitates installation and may also provide some safeguards against sensors/detectors effectively being disabled by disconnecting them from the central unit. Similarly, for ease of installation and to improve security, the nodes of such systems typically include an autonomous power source, such as a battery power supply, rather than being mains powered.

As an alternative to self-contained systems, a security monitoring system may include an installation at a premises, domestic or commercial, that is linked to a remote central monitoring station (CMS) where, typically, operators manage the responses required by different alarm and notification types. In such centrally monitored systems, the central unit at the premises installation typically processes detection events received from the nodes in the installation, and notifies the central monitoring station of only some of these, depending upon the settings of the system and the nature of the detected events. In such a configuration, the central unit at the installation is effectively acting as a gateway between the nodes and the central monitoring station. Again, in such installations the central unit may be linked by wires, or wirelessly, to the various nodes of the installation, and these nodes will typically be battery rather than mains powered.

Such security monitoring systems contribute to the safety and wellbeing of occupants of the protected premises, as well as safeguarding articles within the protected perimeter - which may of course not simply be limited to a house or dwelling but may also extend to the grounds of the house, protected by a boundary fence and gate, for example.

Embodiments of the present invention seek to provide enhanced security monitoring systems, and corresponding apps, methods and other implementations that improve the scope of security monitoring systems to address aspects of the problem of entry systems as well as providing new functionality and methods.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a one aspect, a method for operating a security monitoring system for monitoring a premises is provided. The method comprises the steps of detecting a first person by means of a first imaging means arranged to monitor a first exterior portion of the premises, attempting to identify said first person, detecting a second person by means of a second imaging means arranged to monitor a second exterior portion of the premises, and attempting to identify said second person. Depending on the result of the attempt to identify said second person, the method comprises a step of performing one or more of a selection of actions.

Such method may be advantageous for a system user in that the system may detect where the occupants are at the moment, and it may also detect person(s) approaching the premises, from a direction not visible from the location of the occupants. The system takes appropriate actions, which may enhance a feeling of security by the occupants.

In some embodiments, the step of attempting to identify said first person comprises identifying said person as an occupant of the premises.

In some embodiments, the method further comprises, if said second person is identified as an authorized person, performing one or more of a first selection of actions.

In some embodiments, the method further comprises, if said second person is identified as an unauthorized person, performing one or more of a second selection of actions.

In some embodiments, the method further comprises, if said second person is identified as an unknown person, performing one or more of a third selection of actions.

In some embodiments, the steps of attempting to identify comprises one or more of: determining if a smart device associated with an authorized person has joined a local Wi-Fi network of the premises, position determination of a smart device associated with an authorized person, face recognition, gait recognition, voice recognition.

In some embodiments, the step of performing a first selection of actions comprises one or more of: unlocking one or more gates of the premises, unlocking one or more doors of the premises, transmitting push notification to one or more user devices associated with the security monitoring system.

In some embodiments, the step of performing a second selection of actions comprises one or more of: locking one or more gates of the premises, locking one or more doors of the premises, triggering an alarm, such as a sound and/or light alarm, transmitting a push notification to one or more user devices associated with the security monitoring system, notifying a remote central monitoring station associated with the security monitoring system, increase a sensitivity level of system nodes associated with the security monitoring system.

In some embodiments, the step of performing a third selection of actions comprises one or more of: locking one or more gates of the premises, locking one or more doors of the premises, triggering an alarm, such as a sound and/or light alarm, transmitting a push notification to one or more user devices associated with the security monitoring system, notifying a remote central monitoring station associated with the security monitoring system, increase a sensitivity level of system nodes associated with the security monitoring system.

In one aspect, a security monitoring system for monitoring a premises is provided. The system comprises a control unit, at least one first imaging unit configured to capture images of at least a first portion of the exterior of the premises, and at least one second imaging unit configured to capture images of at least a second portion of the exterior of the premises. The control unit is configured to detect a first person by means of the first imaging means and to attempt to identify said first person, detect a second person by means of the second imaging means and to attempt to identify said second person. Depending on the result of the identification of said second person, the control unit is configured to perform one or more of a selection of actions.

In some embodiments, the system further comprises at least one additional sensor. Optionally, the at least one additional sensor is at least one movement detector, such as optionally a PIR sensor and/or a radar sensor. The at least one additional sensor may be arranged in an exterior portion of the premises, configured to detect movement in said portion of the premises.

In some embodiments, the first and/or second imaging unit(s) are configured to capture images as a response to movement detected by one of the at least one movement detector.

In some embodiments, the system further comprises at least one audio interface configured to capture audio in at least one exterior portion of the premises.

In some embodiments, the system further comprises a user device configured to one or more of: display still or video images captured by the first and/or second imaging unit(s), receiving audio from one or more audio interface(s), communicate position data of the user device to the control unit, transmit input data provided by a user to the control unit, transmit locking and/or unlocking signals to one or more electronic door lock(s) and/or gate lock(s), receive data from the control unit, present data as notifications.

In some embodiments, the system further comprises a remote central monitoring station, configured to one or more of: control an armed/unarmed state of the security monitoring system, control an alarm of the security monitoring system; control a lock state of at least one door lock, control a lock state of at least one gate lock, control operation of the first and/or second imaging unit, control operation of any further image detection unit(s) of the security monitoring system, transmit images from any image detection unit of the security monitoring system to the user device, communicate with the user device, communicate with the central unit, communicate with an emergency service(s), transmitting images from any image detection unit(s) of the security monitoring system to the emergency service(s), transmitting information/data to the emergency service(s), optionally comprising one or more of premises info, user info, data log(s), image(s), video, audio from any detection means of the security monitoring system.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
Figure 1 is a schematic drawing showing a front elevation of stylised building monitored by a security monitoring system according to an embodiment of the invention;
Figure 2 is a schematic part plan view of a premises protected by the security monitoring system, together with other elements of the system;
Figure 3 is a flowchart of a method for operating the security monitoring system.

Further, in the figures like reference characters designate like or corresponding parts throughout the several figures.

### DETAILED DESCRIPTION

Various embodiments of the disclosed methods and arrangements are discussed in detail below. While specific implementations are discussed, it should be understood that this is done for illustration purposes only. A person skilled in the relevant art will recognize that other components, configurations, and steps may be used without parting from the spirit and scope of the disclosure.

In the description and claims the word "comprise" and variations of the word, such as "comprising" and "comprises", does not exclude other elements or steps.

Hereinafter, certain embodiments will be described more fully with reference to the accompanying drawings. It will be apparent to those skilled in the art that various modifications and variations can be made without departing from the inventive concept. Other embodiments will be apparent to those skilled in the art from consideration of the specification and practice disclosed herein. The embodiments herein are provided by way of example so that this disclosure will be thorough and complete, and will fully convey the scope of the inventive concept, and that the claims be construed as encompassing all equivalents of the present inventive concept which are apparent to those skilled in the art to which the inventive concept pertains. If nothing else is stated, different embodiments may be combined with each other.

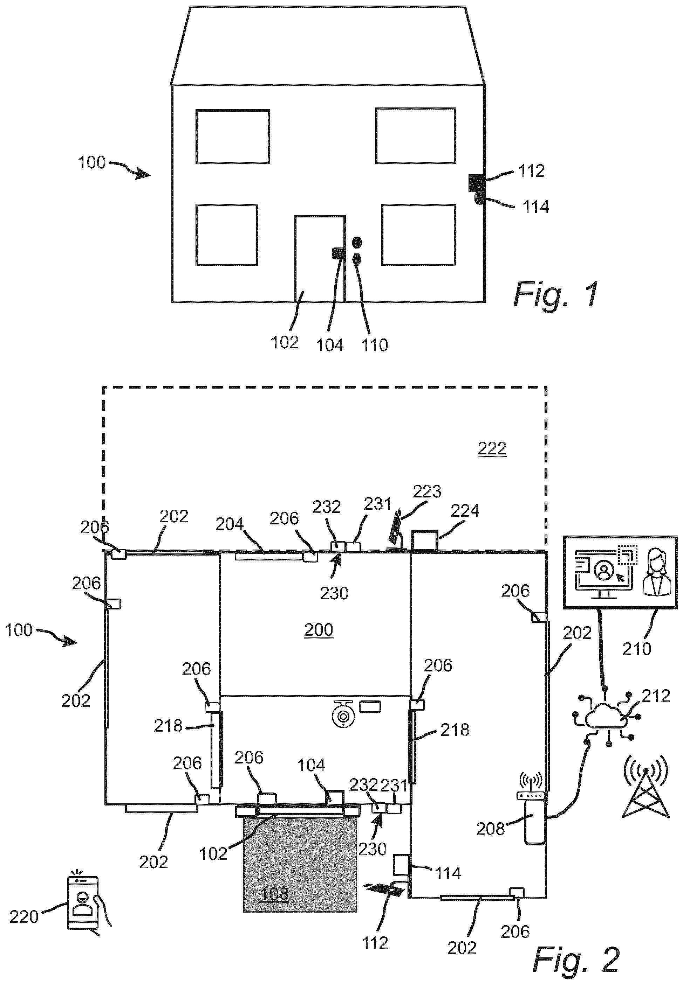

Figure 1 shows a view of the front of a premises 100 protected by a security monitoring system. The premises 100, here in the form of a house, have an exterior door, here front door, 102. The door gives access to a protected interior space 200. The security monitoring system secures at least part of a perimeter to the premises 100, and the door 102 constitutes an exterior closure in the secure perimeter giving access to a protected interior space 200 of the premises. A lock 104 on the exterior door is optionally electrically controlled so that it can be locked and unlocked remotely. Optionally, as shown, the façade of the house 100 also carries an external keypad 110 by means of which a user can disarm the security monitoring system, and unlock the lock 104.

Figure 2 is a schematic part plan view of the premises 100 protected by the security monitoring system, and other elements of the system, corresponding generally to the premises of figure 1. The front door 102, with lock 104, leads into the protected interior space 200 of the premises. The premises comprises windows 202, each of which, and a rear door 204 being fitted with a sensor 206, respectively, to detect when they are opened. Each of the sensors 206 includes a radio transceiver to report events to a controller, or central unit, 208 of the security monitoring system. If one of the sensors 206 is triggered when the system is armed, a signal is sent to the central unit 208 which in turn may signal an alarm event to a remote central monitoring station 210. The central unit 208 is connected to the remote central monitoring station 210 via the Internet 212, either via a wired or a wireless connection. The central unit 208 may include a memory unit. The central unit 208 may include a control unit.

The system comprises a first image detection unit/imaging unit 223 configured to capture images of a first portion 222 of the plot of the premises 100. The system further comprises a second image detection unit/imaging unit 112 configured to capture images of a second portion 108 of the plot of the premises 100.

The first and/or image detection unit 112, 223 is e.g. a camera, such as a motion picture camera, such as a video camera, or a still image camera. The first and/or the second image detection units 112, 223 may be associated with a respective movement detector 114, 224, which may be separate from or may be integral with the respective image detection unit(s) 112, 223. The movement detector may be a PIR sensor, a radar sensor, a pixel movement sensor or any other suitable motion detection sensor. The image detection unit(s) 112, 223 will hereinafter also be referred to as a video camera(s). Optionally, additional exterior cameras are arranged in other locations of the exterior of the premises 100.

The first video camera 223 may have a field of view including one or more of a back yard, a garden, a back door, a private area of the plot of the premises 100.

The second video camera 112 may have a field of view including the front door 104/the front door opening of the premises 100. The video camera 214 may be directed towards the front door 104.

The first video camera 223 may be arranged, both when the security monitoring system is armed and when it is unarmed, to capture images, such as video images, of a first exterior portion 222 of the house 100, e.g. a garden, in the back of the house, and/or any other portion of the plot of the premises 100 not visible from the front door 102.

The second video camera 112 may be arranged, both when the security monitoring system is armed and when it is unarmed, to capture images, such as video images, of a second exterior portion 108 of the house 100, e.g. a garden in the front of the house, an entry way, the front door 102, and/or any other portion of the plot of the premises 100 associated with the front door 102.

In some embodiments, the electrically controlled lock 104 is wirelessly coupled to the central unit 208.

One or more of the interior doors 218 of the premises may be provided with a sensor 206 to detect the opening/closing of the door.

The system may further comprise one or more audio interface(s) 230, preferably comprising both an audio input device 231, and an audio output device 232. The audio interface 230 may be separate from or may be integral with the first and/or second image detection unit 112, 223. The audio interface 230 may be configured to collect and/or record sound/audio in the environment where it is arranged, e.g. in the first exterior portion 222 and/or in the second exterior portion 108 of the plot of the premises 100.

The above mentioned items are preferably coupled to the central unit 208 using transceivers operating in the industrial scientific and medical (ISM) bandwidths, for example a sub-gigahertz bandwidth such as 868 MHz, and the communications are encrypted preferably using shared secret keys.

Also shown in figure 2 is a user device 220, preferably loaded with an appropriate app, and a public land mobile network (PLMN) by means of which the central monitoring station 210, and the central unit 208, may communicate with the user device 220.

Operation of the security monitoring system may be controlled by one or more of: the controller 208, the remote central monitoring station 210, and the security monitoring app installed on the user device 220. For example, the remote monitoring station 210, if provided, may receive one or more signals from any one of: the first and/or second image detection unit, the keypad 110, the sensors 206, the movement sensor(s), the audio interface(s) 230. The remote monitoring station 210 may transmit commands for controlling any one or more of: the arm state of the alarm system (e.g. armed or unarmed); commanding a tripped alarm state to be signalled by the alarm system (e.g. by triggering one or more sirens to generate alarm noise); commanding a lock state of the door lock 104 (e.g. locked or unlocked), commanding operation of one or more cameras to transmit images to the remote monitoring unit/user device application/app. Communication with the remote monitoring station 210 may pass through the controller 208, as described above. In other embodiments, not including the remote monitoring station 210, or should communication with the remote monitoring station 210 be interrupted, operation of the alarm system may be controlled by the controller 208. In yet other embodiments, the controller 208 may be omitted, and the individual peripheral devices may communicate directly with the remote monitoring station 210.

The triggering of an alarm may comprise one or more of: sound signals, light signals, smoke release, sending an alarm notification to a remote monitoring centre, sending alarm notification to one or more user devices associated with the security monitoring system, sending alarm notification to emergency service(s) etc.

The security monitoring system application/app is installed on a user device 220, here shown as a smartphone, although it could be almost any kind of electronic device, such as a laptop or desktop computer, a tablet such as an iPad, a smart watch, or even a television. The security monitoring system app may be used to display still and/or video images captured by the one or more cameras 112, receive audio from the audio interface 230, provide position data of the device on which the app is installed to the controller 208, transmit input data provided by a user to the controller 208, transmit locking and/or unlocking signals to the electronic lock 104, receive data from the controller 208 and present these as notifications.

The video cameras 112, 223 may be configured to be armed or unarmed. In the armed state, it is configured to capture video images. It may be configured to capture images only as a response to a detection by the associated movement detector 114, 224 of a movement. Alternatively, it may be configured to capture images continuously. The video cameras may be configured to capture images only when one or more of the at least one audio interface 230 captures an audio signal, or it may be configured to capture images continuously.

The video cameras may include an internal CPU, and/or be configured to communicate with the central unit 208. In the case of the video camera(s) comprising an internal CPU, it may be configured to communicate directly with the user device 220. In other cases, the video cameras may be configured to transmit data to the central unit 208, which may be configured to communicate with the user device 220.

The system may be configured to analyze and/or compare audio samples recorded/collected by any of the audio interfaces 230 and compare these with audio samples of occupants, authorized and unauthorized persons. Optionally, the system may be configured to scan for a predetermined phrase uttered by the second person residing in or entering the second monitored area 108.

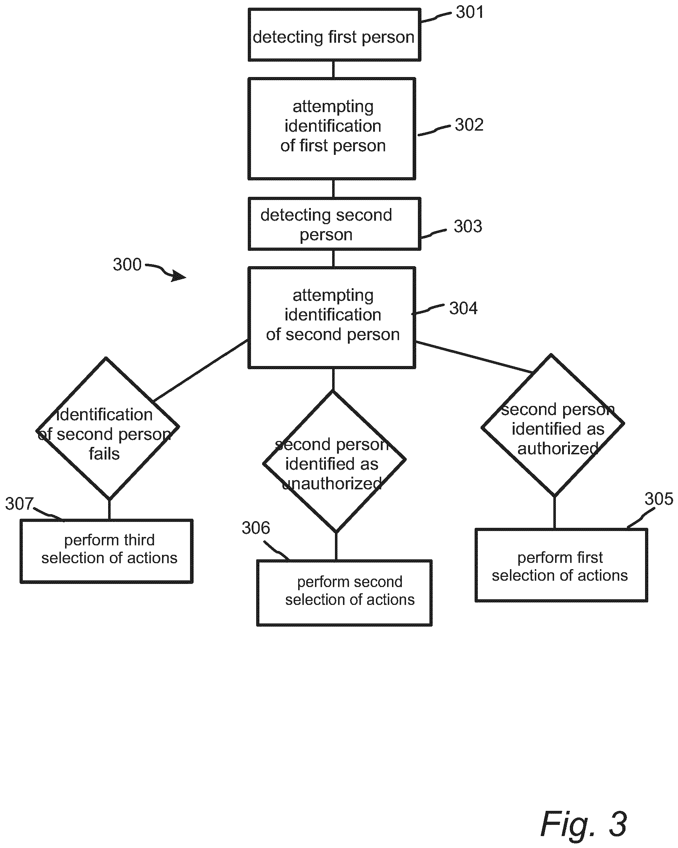

With reference to Fig. 3, a method 300 of operating the security monitoring system is described.

If the first video camera 223 is not continuously streaming video images, the method may include a step of detecting a movement by means of the movement detector 224, such as optionally by means of a PIR sensor and/or a radar sensor and/or pixel sensor.

If the first video camera 223 is not continuously streaming video images, the method may also/alternatively, include a step of detecting a voice in the first monitored area 222 by means of the audio interface 230 associated with the video camera 223. As a response to a detected movement and/or sound, the first video camera 223 is configured to start capturing images/record/transmit video.

The CPU is configured to determine 301, by means of image analysis of the images captured by the first video camera 223, if a person resides in the first monitored area 222. I.e. the CPU is configured to determine if a person is present in the first monitored area 222. Suitable, and commonly known algorithms for image analysis are utilized for detecting a person. The algorithm(s) may be carried out on the CPU of the central unit 208, on an internal CPU of the camera 223, or in the central monitoring station 210.

If it is determined that the movement was not caused by a person/human, but the movement detector was triggered by something else, such as an animal, any other moving object, such as a vehicle or the like, the camera 223 may be configured to stop capturing images.

If a person/human is detected 301 in the first monitored area 222, the CPU is configured to attempt to identify 302 the detected person.

The CPU may be configured to utilize one or more of the following in order to determine 304 if the person is an occupant of the premises: determining a geolocation of a smart device associated with an occupant person to be within the first monitored area 22, face or gait recognition algorithms.

If the detected person is identified as an occupant, the system recognizes that the occupant resides in a portion of the plot where they may not be aware of any person(s) approaching the front door, i.e. persons residing in the second monitored area 108. The system is thus configured to raise the awareness of the second monitored area 108. The system may be configured to detect and identify several users as occupants residing in the first monitored area.

The system is configured to detect 303 if a person, referred to as a second person, is captured by the second video camera 112. I.e. a second person is residing in the second monitored area 108. The means and methods for detecting the second person by means of the second video camera correspond to the means and methods for detecting a first person with the first video camera described above.

If a second person is detected 303 in the second monitored area 108, the CPU is configured to attempt to identify 304 the second person.

Depending on the result of the identification 304 of the second person, the CPU is configured to perform one or more of a selection of actions.

The system is configured to determine if the second person belongs to one of the following categories: an occupant, an authorized person, an unauthorized person or an unknown/unrecognizable person.

An occupant may be a person the system has been trained to recognize as an occupant or whose biometric data has been entered into the system and labelled as occupant.

An authorized person may be a person the system has been trained to recognize or a person not previously recognized by the system, but whose biometric data has been entered into the system and labelled as authorized.

An unauthorized person may be a person who is specifically not allowed to enter the premises. The data of such known unauthorized person may have been entered into the system and labelled as unauthorized.

An unknown or unrecognizable person is a person who cannot be identified as occupant, authorized or unauthorized by the security monitoring system.

The system may be configured to store identification information of known persons, authorized persons and/or unauthorized person in the memory unit. Alternatively, this information is stored externally, e.g. in the cloud. The identification information may be biometrics data, gait data, voice samples, etc.

Based on the determination of the category in which the person falls, the system is configured to take one or more of a selection of actions.

If the second person is identified as an authorized person, the CPU is configured to perform 305 one or more of a first selection of actions. If the second person is identified as an unauthorized person, the CPU is configured to perform 306 one or more of a second selection of actions.

If the second person is identified as an unknown/unrecognizable person, the CPU is configured to perform 307 one or more of a third selection of actions.

The first selection of actions may include one or more of the following: unlocking one and/or more gates of the premises 100, unlocking the front doors 102, unlocking the back door 204, unlocking any other door of the premises 100, transmitting push notification to one or more users associated with the security monitoring system, playing a voice message. The push notification may comprise personal information of the detected second person, such as one or more of: name, photo, optionally preregistered in the system and associated with the authorized person, still image(s) captured by the second video camera with the detected second person visible, a sequence of moving image(s) captured by the second video camera with the detected second person visible, a prompt or suggestion to the user to move towards the front door, or any other area/entrance where the second camera is arranged, an option to call and/or message the identified second person.

The second selection of actions may include one or more of the following: locking one and/or more gates of the premises 100, locking the front door 102, locking the back door 204, locking any other door of the premises 100, triggering an alarm, such as a sound and/or light alarm, optionally in indoor alarm and/or an outdoor alarm, transmitting push notifications to one or more users associated with the security monitoring system, playing a voice message, notifying a remote central monitoring station 210 associated with the security monitoring system, increase a sensitivity level of system nodes associated with the security monitoring system, transmitting a security alarm e.g. to a security company or a police department, arming the security monitoring system. The push notification may comprise personal information of the detected second person, such as one or more of: name, photo, optionally preregistered in the system and associated with the unauthorized person, still image(s) captured by the second video camera with the detected second person visible, a sequence of moving image(s) captured by the second video camera with the detected second person visible, a prompt or suggestion to the user to move towards the front door, or any other area/entrance where the second camera is arranged.

The third selection of actions may include one or more of the following: locking one and/or or more gates of the premises 100, locking the front door 102, locking the back door 204, locking any other door of the premises 100, triggering an alarm, such as a sound and/or light alarm, transmitting push notifications to one or more users associated with the security monitoring system, playing a voice message, notifying a remote central monitoring station 210 associated with the security monitoring system, increase a sensitivity level of system nodes associated with the security monitoring system, arming the security monitoring system. The push notification may comprise information regarding the detected second person, such as one or more of: still image(s) captured by the second video camera with the detected second person visible, a sequence of moving image(s) captured by the second video camera with the detected second person visible, a prompt or suggestion to the user to move towards the front door, or any other area/entrance where the second camera is arranged.

The voice message may be played by the audio interface 230 arranged in connection with the first monitored area 222 such that it may be heard by the occupant residing in this area. The voice message may comprise the name of an identified, known person, such as "XXX is approaching the front door". The voice message may comprise information that an unauthorized person is approaching, such as "XXX is approaching the front door". The voice message may comprise information that an unknown person is approaching, such as "An unknown person is approaching the front door".

The system may be configured to transmit the push notification only to the one or more user(s) device 220 associated with the user(s) detected in the first monitored area 222 and identified as an occupant(s).

The system may be configured to transmit the push notification to all user devices 220 connected to a local Wi-Fi network of the premises 100.

The system may be configured to transmit the push notification to all user devices 220 associated with the security monitoring system.

This configuration of the security monitoring system provides the occupants of the premises with an additional level of security, knowing that a part of the premises which they are not attending at the moment is being monitored. The first and second video camera may be configured to capture images, and the above described method may be configured to be carried out regardless of the arm/unarmed state of the security monitoring system.

In one embodiment, an occupant residing in the back yard receives a notification that a family member is approaching the front door, i.e. the occupant is pre-notified of an upcoming event at the front door. They can then choose to approach the front door to greet the approaching person, but may also stay in the back yard, knowing that the system unlocks the front door. They may also, optionally as an option provided in the notification, send a message (optionally predefined) to the approaching person telling them "Come in, the front door is open, I am in the back yard", "I am in the back yard, go to the back gate" or similar.

In one embodiment, an occupant residing in the back yard receives a notification that an unknown person is approaching the front door, i.e. the occupant is pre-notified of an upcoming event at the front door. This gives them an advance warning to start moving towards the front door. However, they need not be in a rush if they have forgotten to lock the front door, knowing that the system locks the door upon identification of an unknown person.

In one embodiment, an occupant residing in the back yard receives a notification that an unauthorized person is approaching the front door, i.e. the occupant is pre-notified of an upcoming event at the front door. This gives them an advance warning to take any appropriate action. They need not be concerned of locking the front door, knowing that the system locks the door upon identification of an unauthorized person.

In one embodiment, several persons are identified in the second monitored area 108. If at least one of the identified persons is an unauthorized person, the system may be configured to perform an action according to the second selection of actions. If at least one of the identified persons is an authorized person, and none is an unauthorized person, the system may be configured to perform an action according to the first selection of actions or according to the third selection of actions. A user of the system may adjust according to which selection of actions the system is to choose depending on which combination of persons being detected.

The security monitoring system may, in addition to the above described, be configured to allow the second person to identify themselves in conventional manners, unlock any doors and/or gates in conventional manners, arming/unarming the security monitoring system in conventional manners etc.

Even though the above description describes an embodiment in which the first and second imaging units are video cameras, in other embodiments, one or both of them may be still image cameras. Instead of capturing or streaming a sequence of moving pictures, the still image camera(s) may be configured to capture still images. The remaining handling, analysis, calculations, determinations, triggerings, notifications etc. correspond to the above described, with possible adjustments for the images being still image instead of a moving picture sequence made, which adjustments the person skilled in the art are familiar with.

The first image detection unit 223 has been described to be monitoring the back yard, but it may in other embodiments be monitoring any other area of the premises separate from the area monitored by the second image detection unit.

The second image detection unit 112 has been described to be directed towards the front door 104, but it may in other embodiments be directed to a front gate, a secondary door or any other entrance into the premises or area of the premises different from the area monitored by the first image detection unit 223.

In one embodiment, the system is configured to alert the second person, optionally if the person is identified as an occupant and/or another authorized person, that they are recognized by the system. The alert may be one or more of a push notification, a sound or light signal, a spoken message or any other suitable alert.

All notifications may also and/or alternatively be sent to the central monitoring station.

The various embodiments described above are provided by way of illustration only and should not be construed to limit the invention. For example, the principles herein may be applied to any alarm system or security monitoring system, even if it only includes some of the sensors described. Those skilled in the art will readily recognize various modifications and changes that may be made to the present invention without following the example embodiments and applications illustrated and described herein, and without departing from the scope of the present disclosure.

Throughout this specification, the word "may" is used in a permissive sense (i.e. meaning having the potential to), rather than in the mandatory sense (i.e. meaning must).

Throughout this specification, the words "comprise", "include", and variations of the words, such as "comprising" and "comprises", "including", "includes", do not exclude other elements or steps.

As used throughout this specification, the singular forms "a", "an", and "the", include plural referents unless explicitly indicated otherwise. Thus, for example, reference to "an" element includes a combination of two or more elements, notwithstanding use of other terms and phrases for one or more elements, such as "one or more" or "at least one".

The term "or" is, unless indicated otherwise, non-exclusive, i.e. encompassing both "and" and "or". For example, the feature "A or B" includes feature "A", feature "B" and feature "A and B".

Unless otherwise indicated, statements that one value or action is "based on", "in response to" and/or "in dependence on" another condition or value or action, encompass both instances in which the condition or value or action is the sole factor and instances where the condition or value or action is one factor among a plurality of factors.

Unless otherwise indicated, statements that "each" instance of some collection have some property should not be read to exclude cases where some otherwise identical or similar members of a larger collection do not have the property, i.e. each does not necessarily mean each and every.

## Claims

1. A method for operating a security monitoring system for monitoring a premises (100), the method comprising the steps of:
- detecting (301) a first person by means of a first imaging means (223) arranged to monitor a first exterior portion (222) of the premises (100);
- attempting to identify (302) said first person,
- detecting (303) a second person by means of a second imaging means (112) arranged to monitor a second exterior portion (108) of the premises (100);
- attempting to identify (304) said second person,
- depending on the result of the step attempting to identify (304) said second person, performing one or more of a selection of actions.

2. The method according to any one of the preceding claims, wherein the step of attempting to identify (302) said first person comprises identifying said person as an occupant of the premises (100).

3. The method according to any one of the preceding claims, further comprising, if said second person is identified as an authorized person, performing (305) one or more of a first selection of actions.

4. The method according to any one of the preceding claims, further comprising, if said second person is identified as an unauthorized person, performing (306) one or more of a second selection of actions.

5. The method according to any one of the preceding claims, further comprising, if said second person is identified as an unknown person, performing (307) one or more of a third selection of actions.

6. The method according to any one of the preceding claims, wherein the steps of attempting to identify (302, 304) comprises one or more of: determining if a smart device (220) associated with an authorized person has joined a local Wi-Fi network of the premises (100), position determination of a smart device (220) associated with an authorized person, face recognition, gait recognition, voice recognition.

7. The method according to claim 3, or any of claims 4-6 when dependent on claim 3, wherein the step of performing a first selection of actions comprises one or more of: unlocking one or more gates of the premises (100), unlocking one or more doors (102, 204) of the premises (100), transmitting push notification to one or more user devices (220) associated with the security monitoring system.

8. The method according to claim 4, or any of claims 5-7 when dependent on claim 4, wherein the step of performing a second selection of actions comprises one or more of: locking one or more gates of the premises (100), locking one or more doors (102, 204) of the premises (100), triggering an alarm, such as a sound and/or light alarm, transmitting a push notification to one or more user devices (220) associated with the security monitoring system, notifying a remote central monitoring station (210) associated with the security monitoring system, increase a sensitivity level of system nodes associated with the security monitoring system.

9. The method according to claim 5, or any of claims 6-8 when dependent on claim 5, wherein the step of performing a third selection of actions comprises one or more of: locking one or more gates of the premises (100), locking one or more doors (102, 204) of the premises (100), triggering an alarm, such as a sound and/or light alarm, transmitting a push notification to one or more user devices (220) associated with the security monitoring system, notifying a remote central monitoring station (210) associated with the security monitoring system, increase a sensitivity level of system nodes associated with the security monitoring system.

10. A security monitoring system for monitoring a premises (100), the system comprising
a control unit,
at least one first imaging unit (223) configured to capture images of at least a first portion (222) of the exterior of the premises (100),
at least one second imaging unit (112) configured to capture images of at least a second portion (108) of the exterior of the premises (100),
the control unit being configured to:
- detect (301) a first person by means of the first imaging means (223) and to attempt to identify (302) said first person,
- detect (303) a second person by means of the second imaging means (112) and to attempt to identify (304) said second person,
- performing one or more of a selection of actions depending on the result of the identification (304) of said second person.

11. The security monitoring system according to claim 10, wherein the system further comprises at least one additional sensor, optionally at least one movement detector (114, 224), optionally a PIR sensor and/or a radar sensor, arranged in an exterior portion of the premises (100), configured to detect movement in said portion (108, 222) of the premises (100).

12. The security monitoring system according to any one of claims 10-11, wherein the first and/or second imaging unit(s) (112, 223) are configured to capture images as a response to movement detected by one of the at least one movement detector (114, 224).

13. The security monitoring system according to any one of claims 10-12, further comprising at least one audio interface (230) configured to capture audio in at least one exterior portion (108, 222) of the premises (100).

14. The security monitoring system according to any one of claims 10-13, further comprising a user device (220) configured to one or more of: display still or video images captured by the first and/or second imaging unit(s) (112, 223), receiving audio from one or more audio interface(s) (230), communicate position data of the user device (220) to the control unit, transmit input data provided by a user to the control unit, transmit locking and/or unlocking signals to one or more electronic door lock(s) (104) and/or gate lock(s), receive data from the control unit, present data as notifications.

15. The security monitoring system according to any one of claims 10-14, wherein the system further comprises a remote central monitoring station (210), configured to one or more of: control an armed/unarmed state of the security monitoring system, control an alarm of the security monitoring system; control a lock state of at least one door lock (104), control a lock state of at least one gate lock, control operation of the first and/or second imaging unit (112, 223), control operation of any further image detection unit(s) of the security monitoring system, transmit images from any image detection unit of the security monitoring system to the user device (220), communicate with the user device (220), communicate with the central unit, communicate with an emergency service(s), transmitting images from any image detection unit(s) of the security monitoring system to the emergency service(s), transmitting information/data to the emergency service(s), optionally comprising one or more of premises info, user info, data log(s), image(s), video, audio from any detection means of the security monitoring system.
